Europäisches Patentamt

European Patent Office

Office européen des brevets

(19)

(11) Veröffentlichungsnummer : **0 143 813**
**B1**

(12) **EUROPÄISCHE PATENTSCHRIFT**

(45) Veröffentlichungstag der Patentschrift :
29.07.87

(21) Anmeldenummer : 84901946.8

(22) Anmeldetag : 10.05.84

(86) Internationale Anmeldenummer :
PCT/CH 84/00071

(87) Internationale Veröffentlichungsnummer :
WO/8404448 (22.11.84 Gazette 84/27)

(51) Int. Cl.⁴ : **A 61 C 19/04**, A 61 C 11/00

(54) **VORRICHTUNG FUER DIE AUFZEICHNUNG DER KONDYLENBEWEGUNGEN EINES PATIENTEN UND DEREN SIMULATION ANHAND VON GEBISSMODELLEN.**

**Verbunden mit 84810228.1/0128117 (europäische Anmeldenummer/Veröffentlichungsnummer) durch Entscheidung vom 30.10.85.**

(30) Priorität : 10.05.83 CH 2549/83

(43) Veröffentlichungstag der Anmeldung :
12.06.85 Patentblatt 85/24

(45) Bekanntmachung des Hinweises auf die Patenterteilung : 29.07.87 Patentblatt 87/31

(84) Benannte Vertragsstaaten :
AT BE CH DE FR GB IT LI LU NL SE

(56) Entgegenhaltungen :
US-A- 3 552 020
US-A- 4 290 754

(73) Patentinhaber : **Weber, Roland**
**Grand-Chêne 5**
**CH-1003 Lausanne (CH)**

(72) Erfinder : **Weber, Roland**
**Grand-Chêne 5**
**CH-1003 Lausanne (CH)**

(74) Vertreter : **Gasser, François W.**
**Hirschengraben 10 Postfach 1555**
**CH-3001 Bern (CH)**

## Beschreibung

Die vorliegende Erfindung betrifft eine Vorrichtung für die Aufzeichnung der Kondylenbewegungen eines Patienten und deren nachträglicher exakter Simulation unter Einbezug von Ober- und Unterkieferzähne-Modellen zwecks Bestimmung der notwendigen Korrekturen der Kauflächen für die Erlangung der idealen Okklusion, gemäss dem Oberbegriff des Patentanspruchs 1.

In der Zahnheilkunde ist, z. B. aus dem 1961 im Verlag Mosbey & Co. erschienenen Buch « Modern Gnathological Concepts » von Victor O. Lucia, bereits eine Mehrzahl von Geräten und Vorrichtungen bekannt, die der Aufzeichnung und Nachbildung der habituellen Okklusion eines Patienten dienen, und zum Zwecke haben, Funktions- oder Okklusionsstörungen des Patienten durch Korrektur der Kauflächenprofile der Zähne an Ober- und Unterkiefer zu korrigieren. Der Praktiker weiss aber, dass all diese Geräte und Vorrichtungen entweder sehr kompliziert zu bedienen sind und/oder Ergebnisse bringen, deren praktische Auswertung sehr aufwendig ist. Zudem lassen sie in der Regel keine nachträgliche Korrektur der Zuordnung der Kauflächen von Ober- und Unterkieferzähnen im Gerät selbst zu, um z. B. Montage- oder Gipsexpansions-Fehler auszugleichen. Ferner werden oft für die Registrierung der Kondylenbewegungen am Patienten und deren Nachbildung separate Geräte verwendet, was die Reproduzierbarkeit der Messungen und Bewegungen stark in Frage stellt, wenn nicht verunmöglicht.

Diese Nachteile hat der Artikulator gemäss der CH-PS 437 629 (US-PS 3,552,020) sowie dessen erste Weiterentwicklung gemäss der CH-PS 604 675 (US-PS 4,185,387) in weitem Masse beseitigt. Es handelt sich bei diesem Gerät erstmals um ein solches, das die räumliche Lagebeziehung des Unterkiefers zum Oberkiefer und die Bewegungen des Unterkiefers anhand einer geeigneten Grenzbewegungsaufzeichnung einzustellen gestattet, was anhand eines zugehörigen Pantografen, der auf die mit dem Artikulator verbundenen Gebissmodelle eines Patienten aufsetzbar ist, in Verbindung mit einem justierbaren Kontrollsockel geschieht. Mit diesem bekannten Gerät lässt sich die ganze Problematik um das « Zentrische Registrat » erstmals in befriedigender Art und Weise lösen.

Ungelöst ist auch in diesem bekannten Artikulator allerdings das Problem der Fixation der Gebissmodelle in der habituellen Okklusionsstellung und der direkte Vergleich von registrierter und habitueller Okklusion auf dem Artikulator, ohne umgipsen der Gebissmodelle. Das damit zusammenhängende Problem der freien Zugänglichkeit zu den Gebissmodellen zwecks Bearbeitung der Kauflächen ist ebenfalls ungelöst.

Aufgabe der vorliegenden Erfindung ist es, eine verbesserte Vorrichtung für die Aufzeichnung der Kondylenbewegungen eines Patienten an ihm selber und deren nachträglicher exakter Simulation im Artikulator anhand von mit dem Artikulator verbundenen Gebissmodellen zu schaffen, die einerseits gegenüber dem aus der CH-PS 604 675 bekannten Gerät weitergehende diagnostische Möglichkeiten bietet und die zudem eine vereinfachte Manipulation ermöglicht und insbesondere das Zurückklappen des Artikulator-Oberteils in beiden Okklusionsstellungen, der registrierten und der habituellen, gestattet, ohne die Modelle umgipsen oder sonstwie ummontieren zu müssen.

Erfindungsgemäss wird diese Aufgabe durch die verbesserte Vorrichtung gelöst, wie sie im Patentanspruch 1 definiert ist.

Im Folgenden ist eine vorteilhafte Ausführungsvariante der erfindungsgemässen Vorrichtung sowie deren Verwendung anhand der Zeichnungen beschrieben. In letzteren zeigt

Figur 1 die Vorrichtung in der Zusammenstellung, wie sie für die Uebertragung der am Patienten aufgezeichneten Unterkieferbewegungen anhand von Gebissmodellen der Ober- und Unterkieferzähne des Patienten verwendet wird,

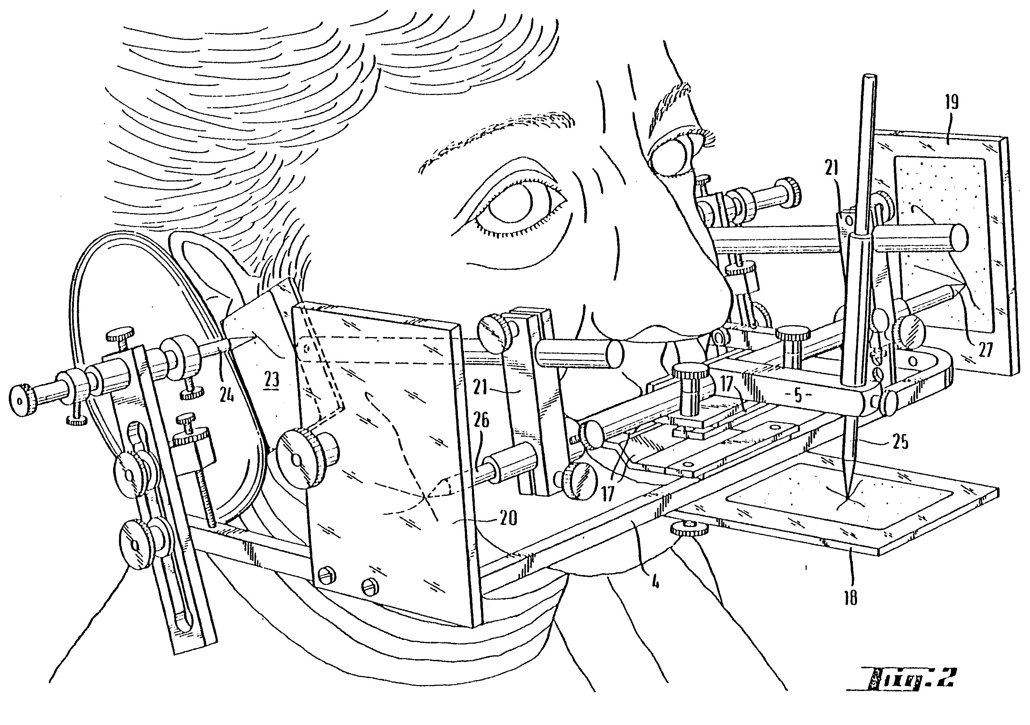

Figur 2 den Pantograf-Teil der Vorrichtung im Einsatz beim Registrieren der habituellen Okklusion an einer Patienten, und

Figur 3 den Artikulator-Teil der Vorrichtung von hinten oben, mit Blick auf die Montage der Blocks der Leitelemente, mittels welchen das Artikulator-Oberteil auf dessen Unterteil gelagert ist.

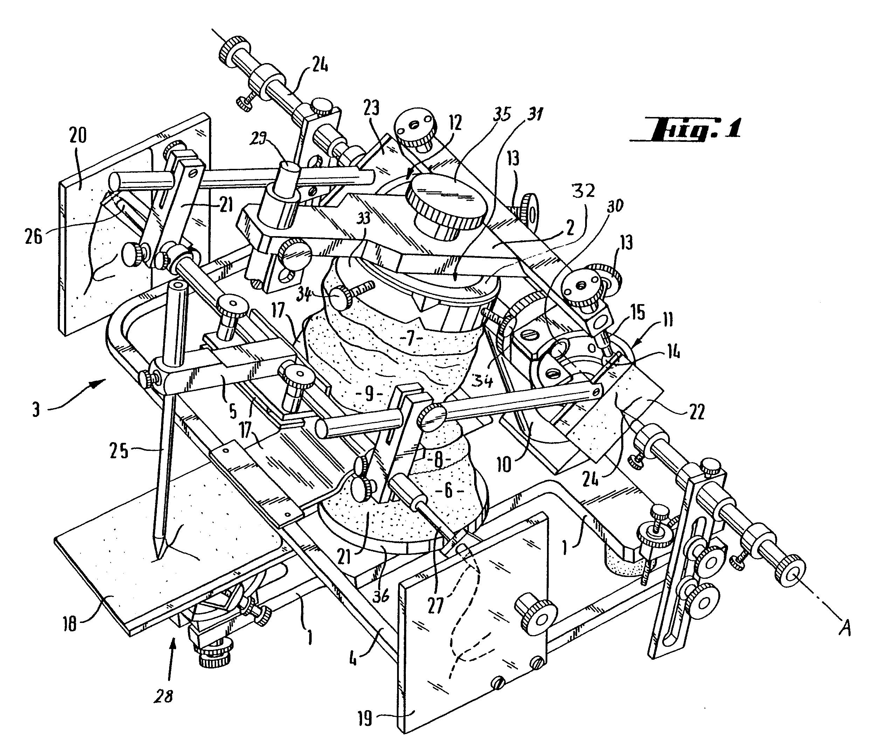

In Fig. 1 erkennt man die einzelnen Teile der erfindungsgemässen Vorrichtung, bei denen es sich im wesentlichen um ein Artikulator-Unterteil 1, ein schwenkbar darauf montierbares Artikulator-Oberteil 2 sowie ein Pantograf-Teil 3, bestehend aus einem Unterkiefer-Registrierbogen 4 und einem Oberkiefer-Registrierbogen 5, handelt. Dabei trägt jedes der Teile 1 und 2 ein Gebissmodell, und zwar das Artikulator-Unterteil 1 das Unterkieferzähne-Modell 6 und das Artikulator-Oberteil das Oberkieferzähne-Modell 7. Ferner trägt der Unterkiefer-Registrierbogen 4 den Unterkieferzähne-Abdruck 8, wogegen der Oberkiefer-Registrierbogen 5 den Oberkieferzähne-Abdruck 9 trägt. Vorteilhafterweise sind dabei die beiden Modelle 6 und 7 in der in der CH-PS 604 675 beschriebenen Art mit den zugehörigen Artikulator-Teilen verbunden, d. h., das Oberkieferzähne-Modell 7 ist über Kompensationsmittel 31, die im wesentlichen aus einer Kompensationsplatte 32, einem Zentrierring 33 mit drei Zentrierschrauben 34 in 120°-Anordnung und einer Fixationsschraube 35 bestehen, mit dem Artikulator-Oberteil 2 verbunden. Damit kann das Oberkieferzähne-Modell 7 auf dem Artikulator-Oberteil 2 dreidimensional reproduzierbar positioniert werden, wie das für eine exakte Reproduktion der registrierten Okklusionsstellung am Patienten notwendig ist. Das Unterkieferzähne-Modell 6 wird demgegenüber direkt auf eine Grundplatte 36 gegipst, die mittels einer nicht dargestellten Schraube mit dem Artikulator-Unterteil 1 verbindbar ist.

Die Abdrücke 8 und 9 ihrerseits sind vorteilhafterweise mittels intraoralen Fixierungslöffeln 17 gemäss dem Int. Modell DM/001 188 auf den entsprechenden Registrierbögen befestigt.

Gegenüber den vorerwähnten bekannten Ausführungen von Artikulatoren gemäss CH-PS 437 629 und CH-PS 604 675 unterscheiden sich die einzelnen Teile der neuen Vorrichtung im wesentlichen durch die nachfolgend aufgeführten Verbesserungen.

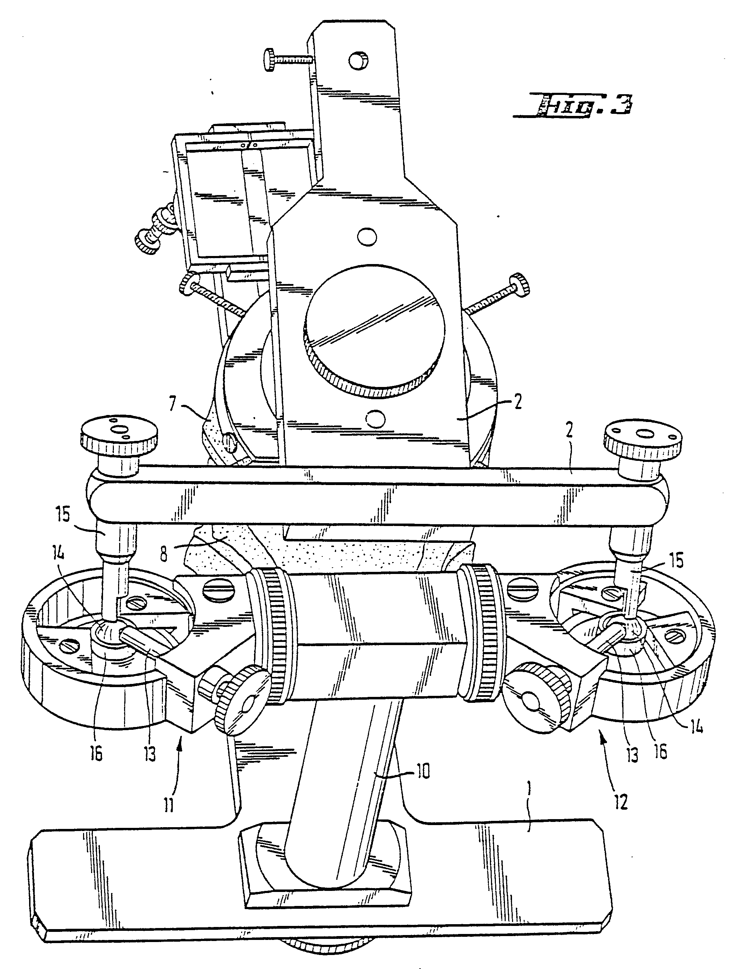

Das Artikulator-Unterteil 1 weist eine einzige Mittelstütze 10 (Fig. 3) auf, so dass die Sicht auf die im Artikulator montierten Gebissmodelle 6 und 7 auch diagonal frei ist und alle Zähne frei zugänglich sind. Die beiden Blocks 11 und 12 (Fig. 3) der Leitelemente sind auf einer gemeinsamen zentralen Achse 30 auf der Interkondylarachse A in relativ zueinander fixierten Lagen montiert und um die Interkondylarachse A drehbar. Jeder Block 11, 12 ist auf der Interkondylarachse A lateral verschiebbar und weist je einen schraubbaren Zylinderstift 13 auf, mittels welchem die Kondylenkugeln 14 (Fig. 3) fixiert werden können. In seinem zentralen vorderen Bereich weist das Artikulator-Unterteil 1 eine an sich bekannte, verstellbare Abstützung 28 für einen vorderen Stützstift 29 auf.

Das Artikulator-Oberteil 2 kann in seinem vorderen Bereich den besagten Stützstift 29 verschieb- und feststellbar aufnehmen und die Arme 15 mit den an ihren unteren Enden sitzenden Kondylenkugeln 14 sind mittels Hilfsringen 16 ausgerüstet, die sich über die Kondylenkugeln 14 schieben lassen, um deren wirksame Durchmesserebenen zu vergrössern. Damit lassen sich Retrusionsbewegungen zur Diagnose okklusionsbedingter Transversal- und Retralverlagerungen simulieren, ohne dass die Montageposition der Modelle 6 und 7 verloren geht. Die Arme 15 sind fest, d. h. seitlich nicht versetzbar.

Der Unterkiefer-Registrierbogen 4 weist auf die Interkondylarachse A des Unterkiefers legbare Spitzen 24 auf und der Unterkieferzähne-Abdruck 8 ist mittels einem vorbeschriebenen Fixierungslöffel 17 mit ihm verbunden. Dieser Fixierungslöffel 17 ist seinerseits mit einem positionierbaren McGrane'schen Stift ausgerüstet. Die vordere Registrierplatte 18 ist, genau so wie die beiden seitlichen Registrierplatten 19 und 20, aus Plexiglas und abnehmbar. Alle drei Registrierplatten 18 bis 20 können reproduzierbar positioniert werden. Die seitlichen Registrierplatten 19 und 20 sind so bemessen und angeordnet, dass die ganzen Oeffnungsbewegungen des Unterkiefers dreidimensional vollständig erfasst werden können.

Der Oberkiefer-Registrierbogen 5 trägt den Oberkieferzähne-Abdruck 9 auf einem abnehmbaren Fixierungslöffel 17 der vorerwähnten Art, der jedoch keinen McGrane'schen Stift aufweist. Mittels festklemmbaren Säulen 21 sind Hilfsregistrierplatten 22 und 23 darauf montierbar, derart, dass sie mit den Spitzen 24 zusammenwirken können. Diese zusätzlichen saggital-vertikalen Hilfsregistrierplatten verbessern die diagnostischen Möglichkeiten, indem sie z. B. pathologische Veränderungen der Kondylenbewegungen oder Fehlfunktionen der Knorpelscheibe direkt zur Darstellung bringen können. Und damit ist die Voraussetzung zur Ableitung der sogenannten « therapeutischen Zentrik » erfüllt.

Durch die sich durch die beschriebene Anordnung der einzelnen Elemente ergebende Führung des McGrane'schen Stiftes des unteren Fixierungslöffels 17 auf dem als Führungsplatte dienenden oberen Fixierungslöffel 17 wird erreicht, dass auf den Registrierebenen bei der Registrierung aller Artikulationsbewegungen drei eindeutige Kreuzungspunkte für die Zentrik entstehen.

Der Fachmann erkennt, dass mit all diesen konstruktiven Verbesserungen die bekannten Ausführungsformen von Artikulatoren in einigen ganz wesentlichen anwendungstechnischen Punkten verbessert werden. Insbesondere werden dadurch diesen bekannten Geräten noch anhaftende Nachteile überwunden und sogar neue diagnostische Möglichkeiten geschaffen.

So bildet insbesondere die neue Ausgestaltung des Artikulator-Unterteils 1 gegenüber allen bekannten Artikulatoren ganz wesentliche Vorteile, ermöglicht es doch die einzige Mittelstütze 10, an alle Zähne der Modelle 6, 7 frei heranzukommen.

Zudem schafft die auf die Interkondylarachse A bezogene feste Verbindung der Blocks 11 und 12 mittels der Achse 30 als Auflage für das Artikulator-Oberteil 2, verbunden mit den Zylinderstiften 13, mittels welchen die Kondylenkugeln 14 an den Leitelementen fest positionierbar sind, erstmals die Möglichkeit, das Artikulator-Oberteil 2 völlig vom Unterteil 1 abzuklappen, ohne seine relative Lage zu diesem zu verlieren.

Ferner ist es dank der Möglichkeit der progressiven Verschiebung eines jeden Blocks 11, 12 auf der Interkondylarachse A lateral mittels eines sogenannten « immediate side-shift » und der Verwendung der Hilfsringe 16 erstmals möglich, jede gewünschte therapeutische Vorbiss-, Rückbiss- und Seitenbissposition der Modelle 6 und 7 ohne Verstellung des Artikulators zu realisieren.

Durch die Verwendung verschiedener Kurvenscheiben-Einsätze als Auflagen für die Kondylenkugeln 14 in den Blöcken 11 und 12 können diese Möglichkeiten zusätzlich erweitert werden.

Mittels je einer zentrisch rund um die Blocks 11 und 12 verschiebbar angeordneten Seitbiss-Positionierungseinheit, im wesentlichen bestehend aus einem Zylinderstift 13, der auf die Kondylenkugeln 14 einwirken kann, kann auch jede Seitbissposition der Modelle 6 und 7, respektive jede Medio- und Laterotrusionsbewegung im Artikulator festgehalten werden.

Die neue Vorrichtung bietet erstmals die Möglichkeit der direkten und gleichzeitigen Kombination von Achsenbestimmung und Aufzeichnung der Kondylenbewegungen in einem Arbeitsgang. Sie ermöglicht es auch, mittels der Hilfsregistrierplatten 22, 23 und den Spitzen 24, auf der Interkondylarachse A die genauen Kiefergelenkbewegungen zu registrieren und ein krankhaftes Kiefergelenkknacken örtlich und zeitlich einwandfrei zu erfassen.

Dank der räumlich genau reproduzierbaren Positionierung aller Registrierplatten (18, 19, 20 und 22, 23) und der Abdrücke 8 und 9 des Pantograf-Teils 3 sowie der Gebissmodelle 6 und 7 auf dem Artikulator, und der Tatsache, dass dieser jederzeit ohne Notwendigkeit der Verstellung irgend einer Einstellung sowohl an ihm selber als auch am Artikulator 1, 2 von diesem zur Kontrolle der Arbeit wieder in den Mund des Patienten einsetzbar ist, ist es möglich, jederzeit sowohl die habituelle als auch die ideale Okklusion eines Patienten zu rekonstruieren, selbst wenn sämtliche Teile demontiert worden waren. Zudem kann das Artikulator-Oberteil 2 in beiden Okklusionsstellungen der Kondylenkugeln 14 zurückgeklappt werden. Eine Uebertragung der Messwerte und Ergebnisse von einem Gerät auf das andere ist dadurch erstmals problemlos möglich. Die erfindungsgemässe Vorrichtung ermöglicht es aber auch, die Messungen und Artikulationsbewegungen computergerecht zu erfassen und auszuwerten, indem sie durch beliebige bekannte Verfahren in elektrische Signale umgewandelt werden.

Indem die gemeinsame Achse 30 der beiden Blocks 11 und 12 auf Kugellagern gelagert wird und nach Belieben entweder in einer definierten Lage gegenüber der festen Mittelstütze 10 feststellbar, oder um ihre Längsachse, die Interkondylarachse A, speilfrei drehbar gehalten wird, wobei die relative Positionierung der beiden Blocks 11 und 12 zueinander immer fest und reproduzierbar bleibt, und das Artikulator-Oberteil 2 dank der schraubbaren Zylinderstifte 13 gegenüber den Blocks 11 und 12 ebenfalls fest und reproduzierbar positionierbar ist, lässt sich der Artikulator 1, 2 sowohl als dreidimensional frei bewegliche Nachbildung eines Patientengebisses als auch als reines Scharniergelenk einsetzen, ohne dass dadurch irgendwelche Einstellungen und Messwerte verändert werden müssten. Dadurch wird die Arbeit des Einschleifens korrekter Kauflächenreliefs an den Gebissmodellen 6 und 7 wesentlich erleichtert, denn durch einfaches Festziehen der Zylinderstifte 13 und das Freigeben der Achse 30 auf der Interkondylarachse A lässt sich das Artikulator-Oberteil 2 in eine völlig stabile Horizontallage parallel zum Unterteil 1 zurückklappen, ohne sich auf den eingesetzten und festgestellten frontalen Stützstift 29 rückwärts abstützen zu müssen. Nun kann problemlos sowohl am Unterkiefer- als auch am Oberkieferzähne-Modell 6, resp. 7 gearbeitet werden, worauf durch simples Zurückklappen des Oberteils 2 und Blockieren der Achse 30 sowie Lösen der Zylinderstifte 13 die ursprüngliche räumliche Lagebeziehung zwischen Unter- und Oberkieferzähne-Modell 6 und 7 wieder hergestellt ist.

Beim Gebrauch der neuen Vorrichtung, die zwangsläufig aus dem Artikulatorteil 1, 2 und dem Pantograf-Teil 3 besteht und in Verbindung mit den auf dem Artikulator montierten Gebissmodellen 6, 7 und den mit dem Pantografen verbundenen Abdrücken 8, 9 einzusetzen ist, wird der Fachmann feststellen, welchen Stellenwert die vorerwähnten Verbesserungen aufweisen und wie stark sie ihm die Arbeit erleichtern.

Die hiervor beschriebene verbesserte erfindungsgemässe Vorrichtung für die Aufzeichnung der Kondylenbewegungen eines Patienten und deren nachträglicher exakter Simulation kann bei Bedarf in Einzelheiten verändert und-/oder noch weiter verbessert werden. So können beispielsweise sämtliche Registrierplatten mit Positionierungs- und Befestigungselementen für das reproduzierbare Positionieren nicht selbst klebender Aufzeichnungspapiere versehen sein. Dies können unter anderem verstellbare Klemmschienen und Positionierungsstifte sein. Ferner können die Registrierplatten mit transparenten Deckblättern bestückt werden, die verhindern, dass bei der Reproduktion der sich auf den Aufzeichnungspapieren befindlichen Kurven ungewollt neue Markierungen ergeben.

Weiter können die Registrierplatten in Miniaturkugeln enden oder durch selbstschreibende Stifte ersetzt werden, wenn nicht druckempfindliche Aufzeichnungspapiere verwendet werden sollen. Um das Loslösen der Gipssockel vom Artikulator zu erleichern, kann derselbe mit einem hydrophoben Dauerbelag versehen werden.

Der vordere Stützstift 29 kann in einem Führungsschlitz klemmend eingepasst oder auf einem verschiebbaren Schlitten so montiert sein, dass er in jeder Vor- oder Rückbisslage drehend und kippend arretierbar ist. Damit kann hinten der « immediate side-shift » sehr schön nachvollzogen werden. Um die jeweilige Stellung des Stiftes bestimmbar zu gestalten, kann eine Einstellskala vorgesehen werden.

## Patentansprüche

1. Vorrichtung für die Aufzeichnung der Kondylenbewegungen eines Patienten und deren nachträglicher exakter Simulation unter Einbezug von Ober- und Unterkieferzähnemodellen zwecks Bestimmung der notwendigen Korrekturen der Kauflächen für die Erlangung der idealen Okklusion, welche Vorrichtung im wesentlichen aus einem Artikulator und einem Pantograf-Teil (3) besteht, wobei sich der Artikulator aus einem Artikulator-Unterteil (1), das für die Aufnahme des Unterkieferzähnemodells (6) mittels definiert positionierbaren Aufnahmemitteln ausstattet ist und dazu in vorbestimmte räumliche Lagebeziehungen bringbarem Artikulator-Oberteil (2), das für die Aufnahme des Oberkieferzähnemodells (7) mittels definiert positionierbaren Aufnahmemitteln ausgestattet ist, zusammensetzt, derart, dass zwei Lagerblocks (11, 12) mit Leitelementen in relativ zueinander fixierbaren Stellungen um eine zentrale und drehbare Achse (A) drehbar vom Artikulator-Unterteil (1) getragen werden und der Abstützung und Führung von Kondylenkugeln (14) des Artikulator-Oberteils (2) dienen und wobei der Pantograf-Teil (3) sich aus einem Unterkiefer-Registrierbogen (4) mit Registrierplatten (18, 19, 20) und darauf befestigbaren Aufzeichnungspapieren und einem Oberkiefer-Registrierbogen (5) mit Schreibstiften (25, 26, 27) zusammensetzt, welche Pantograf-Teile (4, 5) Fixierungslöffel (17) zur Aufnahme von Gebiss-Abdrücken (8, 9) aufweisen, von denen ein Unterkieferzähne-Abdruck (8) auf das Unterkieferzähnemodell (6) auf dem Artikulator-Unterteil (1) aufsetzbar ist und ein Oberkieferzähne-Abdruck (9) auf das Oberkieferzähnemodell (7) auf dem Artikulator-Oberteil (2) aufsetzbar ist, derart dass zwischen dem Artikulator und dem Pantograf-Teil (3) eine Wirkverbindung hergestellt wird, wobei die Fixierungslöffel (17) durch einen McGran'schen Stützstift gegeneinander abstützbar sind, dadurch gekennzeichnet, dass die Lagerblocks (11, 12) Mittel (13, 16) zum Fixieren der Kondylenkugeln (14) aufweisen und dass eine die beiden Lagerblocks (11, 12) tragende Drehachse (30) auf einer Mittelstütze (10) drehbar gelagert und in jeder Drehlage feststellbar ist, so dass der Artikulator-Oberteil (2) jederzeit stabil und freihaltend zurückgeklappt werden kann.

2. Vorrichtung nach Anspruch 1, dadurch gekennzeichnet, dass die Kondylenkugeln (14) je mittels einer Hülse (16) als Führungshilfe gelagert sind, wobei die Kondylenkugeln (14) mit einer zentral auf die Kugelstützen (15) gerichteten Zentrierschraube (13) spielfrei zentral festhaltbar sind.

3. Vorrichtung nach Anspruch 2, dadurch gekennzeichnet, dass die Hülsen (16) abnehmbar sind und eine programmierte Side-shift- und Retralbewegung des Artikulator-Oberteils (2) erlauben und somit jede habituelle Position zu imitieren gestatten, ohne dass die Gebissmodelle (6, 7) umgebettet werden müssen.

**Claims**

1. Device for the recording of condylar movements of a patient and their exact simulation including upper and lower jaw models of sets of teeth to determine the necessary corrections on the biting surfaces in order to obtain an ideal occlusion, which device mainly consists of an articulator and a pantograph (3), whereas the articulator is composed by a lower articulator part (1) that is equipped to receive the lower jaw teeth model (6) by precisely positionable receiving means and an upper articulator part (2) that can be brought into a predetermined spatial position ratio to it and that is equipped to receive the upper jaw teeth model (7) by precisely positionable receiving means, so that two bearing blocks (11, 12) with guiding elements which are fixable in respective positions around a central and rotatable axis (A) are carried pivotably by the lower articulator part (1) and serve as support and guide to the condylar balls (14) of the upper articulator part (2) and whereas the pantograph (3) is composed by a lower jaw recording bow (4) with recording plates (18, 19, 20) and recording papers which are fixable thereon, and an upper jaw recording bow (5) with recording pins (25, 26, 27), whereas the pantograph parts (4, 5) dispose of positioning clutches (17) to receive teeth impressions (8, 9), of which an impression of the lower jaw teeth (8) is mountable on the lower teeth model (6) on the lower articulator part (1) and an impression of the upper jaw teeth (9) is mountable on the upper jaw teeth model (7) on the upper articulator part (2), so that an active connection between the articulator and the pantograph (3) is produced, whereas the positioning clutches (17) can be propped against each other by a McGran supporting pin, characterized by the fact that the bearing blocks (11, 12) dispose of means (13, 16) to fix the condylar balls (14) and that a pivot spindle (30) carrying the two bearing blocks (11, 12) is positioned rotatably on a middle support (10) and is fixable in every pivot position, so that the upper articulator part (2) can be swung back stably and held freely any time.

2. Device according to claim 1, characterized by the fact that the condylar balls (14) are each positioned by a sleeve (16) serving as a guide, whereas the condylar balls (14) can be held centrally and without slackness by a centering screw (13) pointing centrally at the ball supports (15).

3. Device according to claim 2, characterized by the fact that the sleeves (16) are removable and allow programmed side shift and retral movement of the upper articulator part (2) and therefore also allow the reproduction of every habitual position without having to move the teeth models (6, 7).

**Revendications**

1. Dispositif pour la détermination des mouvements des condyles d'un patient et leur simulation exacte moyennant des modèles de denture de la mâchoire supérieure et de la mâchoire inférieure pour déterminer les corrections nécessaires du profil des surfaces masticatrices des dents pour atteindre une occlusion idéale, quel dispositif se compose principalement d'un articulateur et d'un pantographe (3), l'articulateur étant composé d'une pièce d'articulateur inférieure (1) permettant de fixer le modèle de la denture de la mâchoire inférieure (8) par des moyens de repérage pouvant être positionnés précisément, et d'une pièce d'articulateur supérieure (2) pouvant être amenée dans une relation de position spatiale prédéterminée par rapport à la pièce d'articulateur inférieure (6) et qui est équipée pour fixer le modèle de la denture de la mâchoire supérieure (7) par des moyens de repérage qui peuvent être positionnés précisément de sorte que deux blocs d'appui (11, 12) comprenant des éléments de guidage sont fixables dans des positions relatives autour d'un axe (A) central rotatif et sont portés rotativement par la pièce d'articulateur inférieure (1) et servent de support et de pièce guidage pour des billes de condyles (14) de la pièce d'articulation supérieure (2), le pantographe étant composé d'un arc d'enregistrement pour la mâchoire inférieure (4) portant des plaques d'enregistrement (18, 19, 20) et des papiers d'inscription qui sont fixés là-dessus, et un arc d'enregistrement pour la mâchoire supérieure (5) portant des goupilles d'enregistrement (25, 26 27), ces pièces (4, 5) du pantographe comprenant des porte-empreintes (17) pour fixer des modèles de la denture (8, 9), dont un moulage de la denture de la mâchoire inférieure (8) peut être monté sur le modèle de la denture de la mâchoire inférieure (6) sur la pièce d'articulateur inférieure (1) et un moulage de la denture de la mâchoire supérieure (9) peut être monté sur le modèle de la denture de la mâchoire supérieure (7) sur la pièce d'articulateur supérieure (2), de sorte qu'il en résulte une connexion d'action entre l'articulateur et le pantographe, les porte-empreintes (17) s'appuyant réciproquement sur une pointe McGran, le tout caractérisé par le fait que les blocs d'appui (11, 12) disposent de moyens (13, 16) pour fixer les billes de condyle (14) et qu'un axe de rotation (30), portant les deux blocs d'appui (11, 12), est logé rotativement sur un support central (10), de sorte que la pièce d'articulateur supérieure (2) puisse être repliée complètement, stablement et librement à chaque instant.

2. Dispositif selon la revendication 1, caractérisé par le fait que chaque bille de condyle (14) est positionnée par une douille (16) qui sert de guidage pendant que les billes de condyle (14) peuvent être tenues centralement et sans jeu par une vis de centrage dirigé contre le centre des supports (15) des billes.

3. Dispositif selon la revendication 2, caractérisé par le fait que les douilles (16) sont démontables et permettent un mouvement de side-shift et un mouvement rétral contrôlé de la pièce d'articulateur supérieure (2), de sorte que chaque position habituelle puisse être imitée, sans qu'on doive déplacer les modèles de la denture (6, 7).

Fig. 1

Fig. 2

**Fig. 3**